Europäisches Patentamt

European Patent Office

Office européen des brevets

(11) Numéro de publication: **0 421 864 A1**

# DEMANDE DE BREVET EUROPEEN

(21) Numéro de dépôt: 90402716.6

(22) Date de dépôt: 01.10.90

(51) Int. Cl.⁵: **B61F 5/32**, F16F 1/38, B61F 5/30, B60G 11/22

(30) Priorité: 05.10.89 FR 8913016

(43) Date de publication de la demande:
10.04.91 Bulletin 91/15

(84) Etats contractants désignés:
AT BE CH DE DK ES FR GB GR IT LI LU NL SE

(71) Demandeur: **CAOUTCHOUC MANUFACTURE ET PLASTIQUES**
**143 bis, rue Yves Le Coz**
**F-78000 Versailles(FR)**

(72) Inventeur: **Bourgeot, Jacques**
**20, rue des Tilleuls**
**F-95150 Taverny(FR)**
Inventeur: **Gautheron, Michel**
**3, rue Albert Camus**
**F-58000 Nevers(FR)**

(54) Procédé de réalisation de pièces élastiques à rigidités différenciées dans les trois directions par emmanchement de pièces cylindriques à armatures rigides.

(57) Procédé de réalisation de pièces élastiques à rigidités différenciées dans les trois directions, dont les composants formés d'anneaux d'élastomère (17, 20, 21), munis d'alvéoles (25) et adhérisés à des armatures rigides concentriques telles que (18), (19), (22) sont précontraints et emmanchés à force, procurant un rapport au moins égal à 1,5 dans les rigidités radiales orthogonales.

Application à la réalisation de pièces d'isolation anti-vibratoire pour suspensions de véhicules automobiles ou ferroviaires.

FIG. 2a

L'invention est du domaine de la fabrication des pièces d'isolation antivibratoire pour suspensions de véhicules, automobiles ou ferroviaires.

L'invention concerne la fabrication de pièces assurant une liaison élastique à grande flexibilité dans une direction, qui sert d'axe de révolution pour un composant caoutchouc/métal, dont les rigidités dans les directions perpendiculaires audit axe sont contrôlées et différenciées entre elles, grâce à des alvéoles et à une précontrainte radiale.

Les premiers exemples de liaison élastique ont été réalisés par vulcanisation d'un élastomère entre deux bagues rigides concentriques pour former des bagues élastiques comme celles décrites, en particulier dans le brevet FR 1.119.841 de la société SILENTBLOC Limited. L'industrie du caoutchouc a largement amélioré la qualité fonctionnelle des liaisons élastiques, soit par l'adhérisation de la bague élastique à ses deux bagues rigides, soit par l'emmanchement à force d'une bague de caoutchouc entre les bagues rigides.

L'homme de l'art sait que la tenue à la fatigue alternée, en rotation comme en débattement axial, est nettement améliorée par une précontrainte radiale obtenue par réduction de l'épaisseur de la gomme : soit un gonflement diamétral de la bague rigide intérieure assuré par le procédé de "dudgeonnage", qui force une olive à passer axialement dans l'alésage intérieur d'un diamètre inférieur, soit un rétreint de la bague rigide extérieure, comme décrit dans le brevet FR 1.224.834 de KLEBER COLOMBES. D'autres techniques, voisines, sont décrites dans le brevet CH 281.829 de Spencer Moulton et le brevet FR 2.214.067 de PAULSTRA où l'amélioration est apportée par écartement de secteurs. Les dispositifs résultant des techniques précédentes présentent une symétrie de révolution dans les rigidités radiales, donc pas de différenciation entre elles.

Des rigidités radiales différant beaucoup plus de la rigidité axiale - par exemple, dans un rapport dépassant dix, vingt et même cinquante - sont obtenues par le frettage de la matière élastique au moyen d'une bague rigide concentrique, intermédiaire entre deux couches élastiques et adhérisée à celles-ci. Dans ce cas, l'amélioration de la tenue à la fatigue alternée est obtenue par un rétreint de la bague rigide extérieure, associé à un dudgeonnage de la bague rigide intérieure.

La double bague élastique ainsi réalisée présente, par sa géométrie autorisant un débattement vertical suffisant, une simplicité d'emploi alléchante pour une suspension de véhicule, dans laquelle le seul guidage pourrait être assuré par la concentricité des bagues rigides externe et interne, un rappel élastique intense s'opposant à leur excentrage.

Le problème de la réalisation de pièces présentant des rigidités nettement différenciées entre deux directions radiales orthogonales apparait, plus particulièrement, pour les suspensions primaires de bogies ferroviaires. La direction longitudinale assure le parallélisme des essieux contre les efforts de freinage et accélération. La direction transversale protège, par une élasticité appropriée, contre les accélérations latérales dues au guidage du boudin de roue par le rail.

Pour assurer de telles différences de rigidité, le brevet FR 1.279.445 d'Alsthom propose un assemblage de nombreuses pièces mécaniques dans lequel la réalisation d'une rigidité dite "conique", dans les articulations élastiques, permet de maîtriser la rigidité transversale de l'ensemble. Huit articulations élastiques sont donc nécessaires pour contrôler cette rigidité pour chaque essieu, et donc, seize, dans un bogie.

Dans une seconde technique appliquée à des bogies destinés à des véhicules rapides, l'articulation de la boîte à roulements se fait sur un bras de suspension unique.

De telles réalisations sont décrites dans les brevets FR 1.214.906 de MAK MASCHINENBAU et FR 2.604.677 de S.I.G.. Les guidages de l'essieu sont alors assurés par la rotation de ce bras autour d'une articulation élastique dont la déformation "conique" contrôle la rigidité transversale. Une précontrainte axiale améliore la tenue à la fatigue alternative, elle est même réglable dans le second brevet.

Dans un troisième moyen de liaison élastique, décrit dans le brevet GB 720.365 de METALASTIK, la suspension primaire à chevrons caoutchouc/métal assure la tenue de la charge verticale. La liaison longitudinale utilise la très grande rigidité en compression des sandwiches. La rigidité transversale est contrôlée par le cisaillement incliné de ces chevrons.

L'analyse de l'art antérieur montre à l'évidence que les diverses fonctions de guidage ont nécessité, jusqu'alors, des pièces nombreuses ou complexes.

La présente invention a pour objectif un procédé de réalisation de pièces capables d'assurer toutes les fonctions de guidage, remplies par les différentes familles de cinématique de l'art antérieur, en les concentrant dans des pièces de réalisation aisée, d'apparence de révolution, et de fixation simple, de préférence concentrique aux ressorts de suspension primaire.

Un procédé de fabrication simple, par emmanchement à force, superposant des pièces de révolution autorise d'une part la grande différence de rigidités et le maintien radial de l'ensemble. La souplesse axiale à grande course accompagne la force de suspension sans pénaliser la rigidité des ressorts qui équilibrent la pesanteur. De plus, deux rigidités orthogonales diffèrent nettement entre elles, la rigidité longitudinale s'opposant aux efforts de freinage et la rigidité transversale, plus faible, correspondant aux efforts de guidage par le rail.

L'invention réside dans un procédé de réalisation de pièces élastiques à rigidités différenciées dans les trois directions. Elle est caractérisée par l'assemblage par emmanchement à force, sur un même diamètre, de pièces formées d'armatures cylindriques de révolution autour d'un axe commun, reliées deux à deux par adhérisation d'anneaux d'élastomère, vulcanisé et précontraint radialement par rapprochement mécanique des armatures, des alvéoles, ménagées lors du moulage sur chaque face des anneaux d'élastomère, procurant, du fait de la précontrainte radiale, des rigidités radiales orthogonales dans un rapport dépassant 1,5 entre la rigidité dans la direction de l'axe perpendiculaire à l'axe des alvéoles et la rigidité dans la direction axiale desdites alvéoles.

L'invention ainsi que ses variantes seront mieux comprises à la lecture de la description accompagnant les dessins dans lesquels :

- la figure 1 représente une application des pièces réalisées conformément à l'invention et est une coupe, par le plan de symétrie des pièces assurant une suspension primaire de véhicule ferroviaire.

- La figure 2 comprend une coupe axiale et une vue de dessus de la pièce réalisée conformément à l'invention et qui assure la suspension représentée à la figure 1.

- La figure 3 est une variante de pièce d'usage analogue, comprenant un nombre de couches d'élastomère fretté plus élevé que la solution précédente.

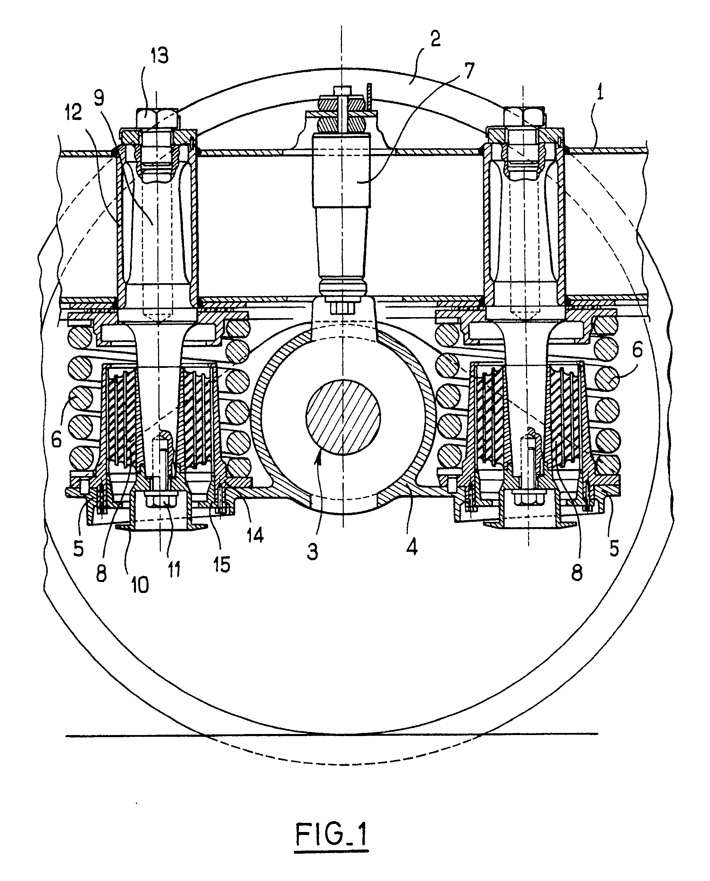

La figure 1 représente une application des pièces réalisées selon le procédé objet de la présente invention. C'est une coupe partielle, passant par le plan de symétrie des pièces assurant la suspension primaire dans un chassis de bogie ferroviaire.

Le chassis de bogie est constitué de deux longerons (1), courant d'un essieu à l'autre et supportant la charge du véhicule par des moyens non représentés. La position de l'essieu est indiquée par la silhouette de la roue (2) et son axe (3) porté par une boîte à roulements (4).

Ladite boîte à roulements (4) comporte deux oreilles (5) qui supportent la charge exercée par les longerons (1) au travers de ressorts de suspension (6), évidemment identiques lorsque la disposition est symétrique. La déformabilité des seuls ressorts de suspension (6) ne suffirait pas à assurer les guidages. Un amortisseur (7), monté élastiquement par des équerres appropriées entre le longeron (1) et la boîte à roulements (4) contrôle les débattements verticaux. Par contre, toutes les fonctions de guidage sont assurées par les pièces élastiques (8) réalisées conformément à l'invention.

Lesdites pièces élastiques (8) sont fixées par leur bague intérieure sur un axe rigide (9). La variante représentée montre un assemblage par cônes, calé par une pièce de révolution (10) qui assure aussi la butée de détente en étant fixée par une vis (11) filetée dans l'axe rigide (9), mais tout autre montage mécanique serait valable.

L'axe rigide (9) est fixé solidement dans le longeron (1) par une pièce tubulaire (12) au moyen d'une vis d'assemblage (13), ce qui permet aux axes géométriques des axes rigides (9) de constituer le plan de référence pour tous les guidages élastiques. Les pièces élastiques (8) sont tenues par leur bague extérieure dans un cylindre de guidage (14) fixé aux oreilles (5) de la boîte à roulements (4) et retenues par un couvercle (15), par exemple fixé par vis. Tous les rappels élastiques de guidage se font du fait de l'excentrage entre les deux cylindres de guidage (14) symétriques et les axes rigides (9).

Les tolérances de défauts de parallélisme entre lesdits axes rigides sont acceptées par l'élasticité radiale des pièces élastiques (8) qui se partagent les efforts longitudinaux, élevés lors du freinage par exemple, aussi bien que les rappels élastiques transversaux, leur force de rappel étant symétriquement équilibrée du fait d'entraxes bien évidemment égaux. Les couples de rotation autour de l'essieu, uniquement dus aux résistances des roulements, sont minimes et assumés par écrasement différentiel des ressorts de suspension (6). Ceux-ci se partagent, à égalité également, les déflexions verticales de suspension, à peine modifiées par la rigidité axiale des pièces élastiques (8). La sécurité en compression est assurée par la venue en contact des cylindres de guidage (14) sur un épaulement approprié, et la sécurité en détente par les pièces de révolution (10) destinées à cet usage.

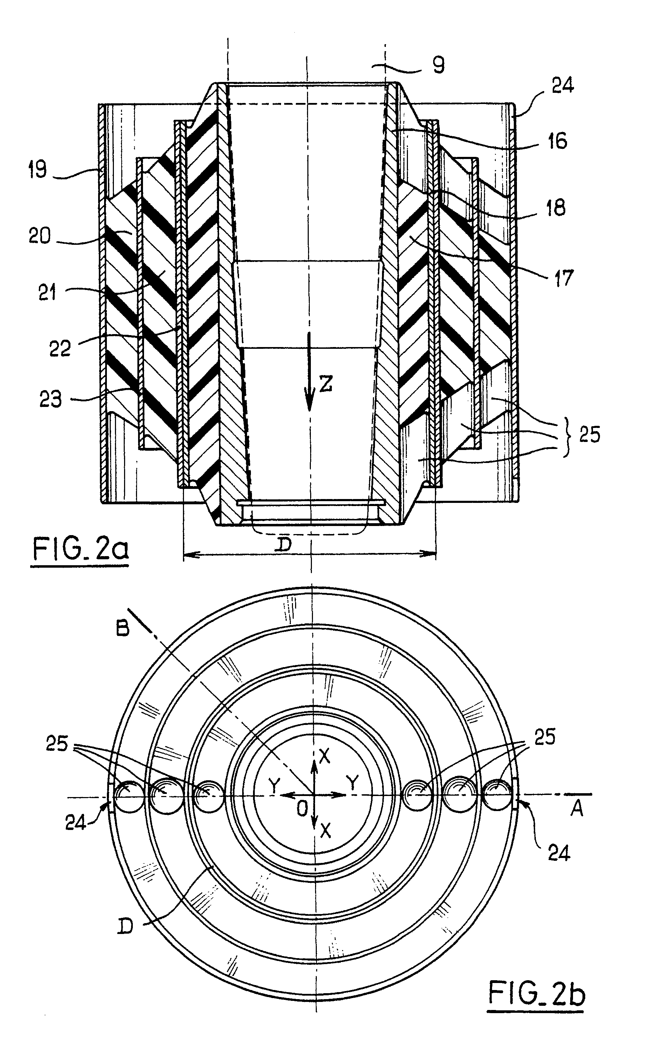

La figure 2 représente l'une desdites pièces élastiques réalisées selon l'invention, la vue 2a étant une coupe axiale et la vue 2b étant une vue de dessus, la ligne brisée BOA indiquant plus exactement les plans de la coupe 2a.

La bague intérieure (16) est ici massive, car sa surface de contact avec l'anneau interne d'élastomère (17) est cylindrique et sa face interne, conique, sert à l'assemblage sur un cone conjugué de l'axe rigide (9), matérialisant l'axe géométrique. Une précontrainte radiale ne peut donc être assurée que par le rétreint de la douille cylindrique (18), qui est extérieure à l'anneau interne d'élastomère (17), la bague intérieure (16), l'anneau interne d'élastomère (17) et la douille cylindrique (18) constituant un composant venu de moulage avant le rétreint.

La bague extérieure (19) est un cylindre rigide, en général métallique, rendu solidaire lors du moulage simultané des anneaux extérieur (20) et intermédiaire (21) d'élastomère avec la douille d'assemblage (22) et la bague intermédiaire (23).

Une précontrainte radiale, améliorant fondamentalement la tenue à la fatigue alternée, est exercée, après moulage, d'une part sur l'anneau extérieur d'élastomère (20) par le rétreint de la bague extérieure (19) et, d'autre part, sur l'anneau intermédiaire d'élastomère (21) par le dudgeonnage de la douille d'assemblage (22).

La déformation plastique de ces pièces, le plus généralement réalisées en tube d'acier, est prévue, lors de la fabrication et du moulage des anneaux d'élastomère, de façon que la surface cylindrique définitive pour la bague extérieure (19) soit compatible avec l'assemblage dans un logement constitué par le cylindre de guidage. La procédure de montage de la suspension peut admettre soit un emmanchement serré sur ladite surface cylindrique, soit un jeu contenu par un couvercle. Un crantage (24) sur la bague extérieure (19) peut servir de sécurité par l'existence d'un pion détrompeur empêchant toute rotation et mauvais montage en cas d'assemblage avec jeu.

Quoi qu'il en soit, la caractéristique essentielle de l'invention est l'assemblage du composant issu de moulage, constitué de la bague intérieure (16), de l'anneau interne d'élastomère (17) et de la douille cylindrique (18), après le rétreint de ladite douille cylindrique (18) par son diamètre extérieur, dans l'alésage de la douille d'assemblage (22). Ledit assemblage est réalisé par emmanchement à force par exemple sous une presse hydraulique. La douille d'assemblage (22) constitue le diamètre intérieur du composant constitué des anneaux d'élastomère intermédiaire (21) et extérieur (20) avec la bague extérieure (19) et la bague intermédiaire (23). La cote, représentée par le diamètre d'assemblage (D), et sa précision après l'opération de dudgeonnage de la douille d'assemblage (22), doivent avoir des tolérances compatibles, en particulier en ovalisation, pour permettre cet assemblage qui, de toutes façons, nécessite un repérage en rotation des deux composants.

Pour les besoins de suspension primaire de véhicules ferroviaires tout particulièrement, le procédé autorise une différenciation marquée, pouvant largement dépasser le rapport 1,5 et atteindre éventuellement quatre, entre les rigidités suivant l'axe (X) de plus grande rigidité et l'axe transversal (Y) utilisé pour le guidage du boudin de roue sur le rail.
Ceci est obtenu en ménageant, sur chaque face libre de l'élastomère du composant moulé, des alvéoles (25) réduisant à peu près de moitié la hauteur de la matière de part et d'autre de l'axe (X) de plus grande rigidité. Le moule utilisé pour la réalisation des alvéoles comporte des pions cylindriques occupant toute l'épaisseur disponible entre armatures.

Après moulage, la faible différence de section d'élastomère que présentent deux coupes perpendiculaires procure un rapport assez voisin de 1 entre les deux rigidités radiales orthogonales. C'est lorsque rétreint et dudgeonnage apportent une réduction d'épaisseur dans un rapport de 8 % à 10 % de l'épaisseur de chaque anneau d'élastomère, qu'une précontrainte s'établit dans la matière. En absence d'alvéoles, la précontrainte prend la forme d'une pression à peu près omnidirectionnelle (sauf au voisinage des faces libres). L'existence des alvéoles (25) modifie la carte de répartition de ladite contrainte qui se trouve totalement orientée par l'existence d'une surface libre le long de l'empreinte libérée par les pions pour former lesdites alvéoles (25).

Tout se passe comme si deux précontraintes élevées étaient ménagées suivant l'axe (X) de plus grande rigidité ; la pression dans l'élastomère décroit ensuite tout au long des anneaux d'élastomère, pour être minimale à proximité des alvéoles (25).

La déformation dans la direction radiale de l'axe transversal (Y) se fait beaucoup plus souplement, sans grandes modifications de la carte des pressions, ce qui explique un rapport de rigidités radiales bien accru par l'effet de la précontrainte.

L'application illustrée présente un rapport de 2,8 entre rigidités radiales. Un rapport de 11,5 entre la rigidité radiale selon l'axe transversal (Y) et la rigidité axiale selon l'axe vertical (Z) et un rapport de 32 entre la rigidité radiale selon l'axe (X) de plus grande rigidité et la rigidité axiale selon l'axe vertical (Z) satisfont les caractéristiques recherchées dans l'application en suspension ferroviaire. La rigidité axiale, faible vis à vis de celle des ressorts de suspension, participe utilement à l'amortissement dynamique des petites oscillations de suspension.

La pièce comportant trois anneaux d'élastomère, telle qu'illustrée, résulte de l'impossibilité de déformation par dudgeonnage de la bague intérieure (16) car le montage sur un axe rigide (9) nécessite que ladite bague intérieure (16) soit massive et conique.

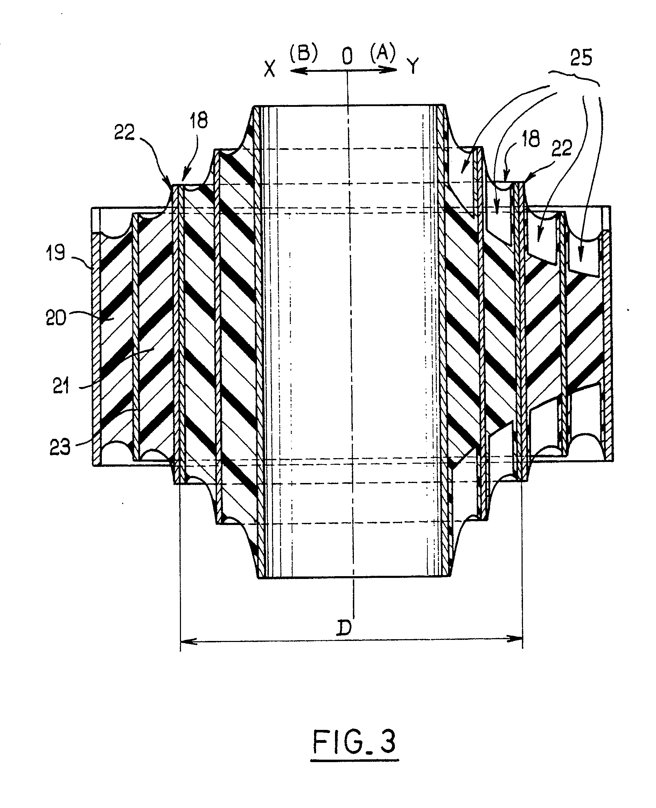

La figure 3 représente une variante de la pièce comportant un nombre pair d'anneaux d'élastomère, montrée selon deux demi-coupes, dans des conditions analogues à la coupe BOA de la vue 2b.

Le dessin représente quatre anneaux d'élastomère assemblés par l'emmanchement d'une douille cylindrique (18) dans une douille d'assemblage (22) sur un diamètre d'assemblage (D). Un assemblage à six couches ou plus, permettant par ce frettage un rapport de rigidités encore plus élevé entre la direction axiale et les deux directions radiales, selon l'axe (X) de plus grande rigidité et selon l'axe transversal (Y), serait également possible.

La précontrainte radiale est possible dans tout composant tel que celui constitué par l'ensemble de la bague extérieure (19), de l'anneau extérieur d'élastomère (20), de l'anneau intermédiaire d'élastomère (21), de la douille d'assemblage (22) et de la bague intermédiaire (23), par le rétreint de la bague extérieure (19) et le dudgeonnage de la douille d'assemblage (22). L'existence sur les faces libres opposées d'alvéoles (25), réalisées au moulage, par exemple sur environ la moitié de la hauteur de l'élastomère, provoque un rapport entre les rigidités radiales orthogonales, pouvant dépasser deux et atteindre quatre ou cinq, si nécessaire pour l'application.

A module constant de l'élastomère, pour une utilisation homogène de ses propriétés, la section d'élastomère, à chaque diamètre considéré, doit être sensiblement constante, afin que les contraintes dans le cisaillement axial demeurent analogues. Ceci a pour conséquence une hauteur de chaque anneau d'élastomère inversement proportionnelle à son diamètre moyen et constitue une limite pratique à la multiplication du nombre d'anneaux d'élastomère, le plus souvent au nombre de quatre.

Si l'hétérogénéité des contraintes due à l'existence des alvéoles (25) est si importante qu'elle arrive à provoquer une ovalisation élastique des douilles d'assemblage, ladite ovalisation agit dans le même sens pour toutes les armatures et ne s'oppose donc pas à l'emmanchement à force sur le diamètre (D), ovalisé. Pour compenser une ovalisation d'autant plus notable de la bague extérieure (19), résultant de la transmission élastique de ces différentes hétérogénéités, une réserve d'épaisseur, supérieure à celle des autres bagues ou douilles, est prévue dans la bague extérieure (19) et permet un réusinage simple sur l'assemblage terminé.

Une disposition, non représentée, comporte simplement deux anneaux d'élastomère, munis d'alvéoles liés à des armatures rigides de part et d'autre du diamètre d'assemblage (D), la précontrainte radiale pouvant être assurée, sur chacun d'eux soit par dudgeonnage de la bague interne soit par rétreint de la bague extérieure.

Dans cette disposition, en effet, il est possible de réaliser la précontrainte radiale par rétreint de la bague extérieure de chacun des composants, dans une première variante, par dudgeonnage de la bague interne de chacun des composants, dans une seconde variante, par rétreint de la bague extérieure du composant emmanché et dudgeonnage de la bague interne du composant recevant l'emmanchement, dans une troisième variante, ou encore par dudgeonnage de la bague interne du composant emmanché et rétreint de la bague extérieure du composant recevant l'emmanchement, dans une quatrième variante. La troisième variante autorise si nécessaire l'emmanchement avant les deux opérations de précontrainte. La quatrième variante n'exclut pas une réalisation simultanée des déformations plastiques des bagues et de l'emmanchement.

Le procédé de réalisation objet de l'invention consiste donc en une succession d'opérations, moulage avec formation des alvéoles dans chacun des composants, suivi d'une opération mécanique de rapprochement des armatures rétreint ou dudgeonnage - et d'un assemblage par emmanchement à force.

- La préparation par moulage de pièces à un ou deux anneaux d'élastomère est accompagnée du formage des alvéoles.

- L'encollage sur une face pour les bagues et douilles extrêmes, sur les deux faces pour les bagues intermédiaires, assure lors de la vulcanisation de l'élastomère la liaison intime physico-chimique entre les armatures rigides et l'élastomère.

- Les étapes de dudgeonnage de la bague interne ou de la douille d'assemblage ou de rétreint de la bague extérieure ou de la douille cylindrique, sur machine à chocs, apportent la résistance à la fatigue alternée dans les débattements axiaux. Les deux opérations de dudgeonnage et rétreint sont nécessaires si la pièce est frettée par une bague intermédiaire rigide.

- L'assemblage sous une presse hydraulique d'emmanchement nécessite l'orientation relative des composants, en raison de la présence des alvéoles. Cette orientation relative est facilitée par la présence de pions et d'un outillage de centrage, éventuellement ovalisé.

La tenue de cet assemblage est largement suffisante pour la fonction remplie, du fait des très faibles efforts transmis par une rigidité axiale très réduite.

Le procédé apporte donc à l'industrie utilisant des pièces élastiques, pour une isolation antivibratoire à rappels élastiques différenciés, telle qu'en particulier la suspension primaire des véhicules ferroviaires, un moyen économique et facilement adaptable pour contrôler les trois rigidités dans des axes perpendiculaires. Il apporte avec la précontrainte radiale, nécessaire à cette différenciation, une tenue à la fatigue alternée particulièrement appréciable.

La présente invention permet de régler, par le nombre pair ou impair de couches d'élastomère, ainsi que la forme et la dimension des alvéoles et par l'intensité de la précontrainte radiale, les rapports de rigidités souhaités, afin d'adapter la pièce à l'application, les ordres de grandeurs des rigidités pouvant être nettements différents, lorsqu'il s'agit, par exemple, d'une suspension de véhicule automobile ou de véhicule ferroviaire.

## Revendications

1. Procédé de réalisation de pièces élastiques à rigidités différenciées dans les trois directions, caractérisé en ce que des composants formés d'armatures cylindriques de révolution autour d'un axe commun sont assemblés par emmanchement à force sur un diamètre (D), lesdites armatures rigides étant reliées deux à deux par adhérisation d'anneaux d'élastomère (17, 20, 21), vulcanisé et précontraint radialement par rapprochement mécanique de leurs armatures, et en ce que des alvéoles (25), ménagées au moulage sur chaque face desdits anneaux d'élastomère procurent, du fait de ladite précontrainte radiale, des rigidités radiales orthogonales différant dans un rapport au moins égal à 1,5 entre la rigidité dans la direction de l'axe (X) perpendiculaire à l'axe desdites alvéoles (25) et la rigidité dans la direction de l'axe transversal (Y) desdites alvéoles (25).

2. Procédé de réalisation de pièces élastiques à rigidités différenciées dans les trois directions selon la revendication 1, caractérisé en ce que l'assemblage est réalisé entre un composant à deux anneaux d'élastomère (20) et (21), munis chacun d'alvéoles (25) et frettés par une bague intermédiaire (23) et un composant à un anneau d'élastomère (17), également muni d'alvéoles (25), les deux composants étant emmanchés par la douille cylindrique (18) du second composant dans la douille d'assemblage (22) du premier, l'ensemble réalisé à trois anneaux d'élastomère fretté procurant un rapport des rigidités radiales orthogonales compris entre deux et quatre, et de préférence voisin de 2,8.

3. Procédé de réalisation de pièces élastiques à rigidités différenciées dans les trois directions selon la revendication 1, caractérisé en ce que l'assemblage est réalisé entre un composant à deux anneaux d'élastomère (20), (21), munis d'alvéoles (25) et frettés par une bague intermédiaire (23) et un autre composant à deux anneaux d'élastomère également munis d'alvéoles (25) et frettés par une bague intermédiaire, l'ensemble réalisé à quatre anneaux d'élastomère frettés procurant un rapport des rigidités radiales orthogonales compris entre trois et cinq et de préférence de l'ordre de quatre.

4. Procédé de réalisation de pièces élastiques à rigidités différenciées dans les trois directions selon la revendication 1, caractérisé en ce que la précontrainte des anneaux d'élastomère tels que (17) ou (20) est réalisée par rétreint de la bague extérieure (19) ou de la douille cylindrique (18).

5. Procédé de réalisation de pièces élastiques à rigidités différenciées dans les trois directions selon la revendication 1, caractérisé en ce que la précontrainte des anneaux d'élastomère tels que (21), comportant des alvéoles (25), est réalisée par dudgeonnage de la douille d'assemblage (22).

6. Procédé de réalisation de pièces élastiques à rigidités différenciées dans les trois directions selon la revendication 1, caractérisé en ce que l'assemblage est réalisé entre deux composants comportant chacun un anneau d'élastomère muni d'alvéoles (25) et en ce que la précontrainte radiale est assurée par rétreint de chacune des bagues extérieures des composants, l'ensemble réalisé à deux anneaux frettés d'élastomère procurant un rapport des rigidités radiales orthogonales au moins égal à deux.

7. Procédé de réalisation de pièces élastiques à rigidités différenciées dans les trois directions selon la revendication 1, caractérisé en ce que l'assemblage est réalisé entre deux composants à un anneau d'élastomère comportant des alvéoles (25) et en ce que la précontrainte radiale est assurée par dudgeonnage de chacune des bagues internes des composants, l'ensemble réalisé à deux anneaux frettés d'élastomère procurant un rapport des rigidités radiales orthogonales au moins égal à deux.

8. Procédé de réalisation de pièces élastiques à rigidités différenciées dans les trois directions selon la revendication 1, caractérisé en ce que l'assemblage est réalisé entre deux composants comportant chacun un anneau d'élastomère muni d'alvéoles (25) et en ce que la précontrainte radiale est assurée par rétreint de la bague extérieure de l'un des composants et par dudgeonnage de la bague interne de l'autre composant, l'ensemble réalisé à deux anneaux frettés d'élastomère procurant un rapport des rigidités radiales orthogonales au moins égal à deux.

9. Procédé de réalisation de pièces élastiques à rigidités différenciées dans les trois directions selon la revendication 1, caractérisé en ce que des assemblages successifs sont réalisés par emmanchement de trois ou quatre composants à un ou deux anneaux d'élastomère munis d'alvéoles (25) et adhérisés à des armatures rigides concentriques, la précontrainte radiale procurant un rapport entre les rigidités radiales orthogonales compris entre trois et cinq.

FIG_1

7

FIG_2a

FIG_2b

FIG. 3

Office européen
des brevets

RAPPORT DE RECHERCHE
EUROPEENNE

Numéro de la demande

EP 90 40 2716

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y,A | FR-A-2 333 163  (CAOUTCHOUC MANUFACTURE ET PLASTIQUES KLEBER-COLOMBES) <br> * le document en entier * <br> — — — | 1,2,3,5, 7-9 | B <br> 61 F 5/32 <br> F 16 F 1/38 <br> B 61 F 5/30 |
| Y,A | FR-A-2 534 331  (CAOUTCHOUC MANUFACTURE ET PLASTIQUES) <br> * le document en entier * <br> — — — | 1,2,3,6-9 | B 60 G 11/22 |
| A | US-A-3 121 560  (P.J.REED) <br> * colonne 2, lignes 42 - 58; figures 1-3 * <br> — — — | 1,2,5,9 | |
| A | US-A-2 263 310  (E.H.PIRON) <br> * colonne 3, lignes 5 - 58; figure 8 * <br> — — — | 1-3,9 | |
| A | PATENT ABSTRACTS OF JAPAN vol. 10, no. 246 (M-510)(2302) 23 août 1986, <br> & JP-A-61 74927 (TOYO TIRE & RUBBER CO LTD) 17 avril 1986, <br> * le document en entier * <br> — — — | 1-3,6-9 | |
| A | GB-A-9 245 58  (HENDRICKSON MFG CO) <br> * page 1, ligne 26 - page 2, ligne 30; figures 1-9 * * page 3, lignes 7 - 53 * * page 4, lignes 49 - 124 * <br> — — — | 1-3 | DOMAINES TECHNIQUES RECHERCHES (Int. Cl.5) |
| A | FR-A-9 571 74  (METALASTIK LTD) <br> * page 1, ligne 39 - page 2, ligne 33 * <br> — — — | 4-9 | B 61 F <br> F 16 F <br> B 60 G |
| A | GB-A-9 770 95  (MASCHINENFABRIK AUGSBURG-NÜRNBERG AG) <br> — — — — — | | |

Le présent rapport de recherche a été établi pour toutes les revendications

| Lieu de la recherche | Date d'achèvement de la recherche | Examinateur |
|---|---|---|
| La Haye | 10 janvier 91 | PEMBERTON P.E.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

 

& : membre de la même famille, document correspondant